# EUROPÄISCHE PATENTANMELDUNG

(11) **EP 2 390 659 A1**
(43) Veröffentlichungstag der Anmeldung: **30.11.2011**
(21) Anmeldenummer: 11167662.3
(22) Anmeldetag: 26.05.2011
(51) Int. Cl.: G01N 29/28, G01L 7/08, G01L 9/00

(54) **Ultraschallprüfkopf mit einer als Vorlaufstrecke dienenden geschlossenen Wasserkammer**

(30) Priorität: 26.05.2010 DE 102010029320
(71) Anmelder: intelligeNDT Systems & Services GmbH, 91052 Erlangen (DE)
(72) Erfinder: Zaus, Edgar, 90439 Nürnberg (DE); Meier, Rainer, 91058 Erlangen (DE)
(74) Vertreter: Mörtel & Höfner

(57) **Zusammenfassung**

Bei einem Ultraschallprüfkopf mit einer als Vorlaufstrecke dienenden geschlossenen Wasserkammer (10) ist in einer Seitenwand der Wasserkammer (10) eine Membran (16) angeordnet, deren Auslenkung vom in der Wasserkammer (10) herrschenden Druck abhängt. Mit einer außerhalb der Wasserkammer (10) angeordneten Messeinrichtung (18) wird die Auslenkung der Membran (10) erfasst. Dies ermöglicht eine einfache Kontrolle, ob der in der Wasserkammer (10) herrschende Druck hinreichend groß ist, so dass das Auftreten von störenden (Gas-)Blasen ausgeschlossen werden kann oder aber zumindest unwahrscheinlich ist.

## Beschreibung

Ultraschallprüfkopf mit einer als Vorlaufstrecke dienenden geschlossenen Wasserkammer

Die Erfindung bezieht sich auf einen Ultraschallprüfkopf mit einer als Vorlaufstrecke dienenden geschlossenen Wasserkammer.

Bei der zerstörungsfreien Werkstoffprüfung mittels Ultraschall folgt das Ankoppeln des in der Regel aus einer piezoelektrischen Keramik bestehenden Ultraschallwandlers an das zu prüfende Werkstück über eine Wasservorlaufstrecke. Dies kann in sogenannter lokaler Immersion durchgeführt werden. Lokale Immersion bedeutet, dass sich im Gegensatz zur gewöhnlichen Immersionstechnik das zu prüfende Werkstück nicht in einem Wasserbehältnis befindet, sondern nur an der momentanen Prüfposition der Ultraschall durch eine lokale Wasservorlaufstrecke in das Bauteil eingekoppelt wird. Dies wird häufig durch eine Wasserkammer realisiert, die unmittelbar vor dem den Ultraschall erzeugenden Ultraschallwandler angebracht wird.

Das in dieser Wasserkammer befindliche Wasser darf keine Luftblasen enthalten, um das Ultraschallsignal nicht zu stören. Da jedoch die Wasserkammer nicht beliebig dicht realisiert werden kann, entweicht mit der Zeit Wasser aus der Wasserkammer und es entstehen (Gas-)Blasen. Durch das Füllen der Wasserkammer mit einem Überdruck lässt sich die Bildung von Blasen hinauszögern. Um kontrollieren zu können, ob sich im Wasser Blasen befinden oder nicht, ist es im Stand der Technik bekannt, durch ein Sichtfenster in der Wasserkammer oder beispielsweise durch Verwendung einer optisch transparenten Koppelmembran eine optische Sichtprüfung durchzuführen. Ist kein optisches Fenster vorhanden oder die Koppelmembran undurchsichtig ist es üblich, dass die Wasserkammer in regelmäßigen Abständen unabhängig davon, ob Blasen vorhanden sind oder nicht, neu befüllt wird. Hierbei besteht jedoch dennoch das Risiko, dass sich bereits unentdeckt vor der neuen Befüllung Blasen gebildet haben.

Der Erfindung liegt daher die Aufgabe zu Grunde, einen Ultraschallprüfkopf mit einer als Vorlaufstrecke dienenden geschlossenen Wasserkammer anzugeben, bei dem auf einfache Weise überprüft werden kann, ob der Druck innerhalb der Wasserkammer hinreichend groß ist, um eine Blasenbildung ausschließen zu können.

Die genannte Aufgabe wird gemäß der Erfindung gelöst mit einem Ultraschallprüfkopf mit den Merkmalen des Patentanspruches 1. Gemäß diesen Merkmalen enthält der Ultraschallprüfkopf eine in einer Seitenwand der Wasserkammer angeordnete Membran, deren Auslenkung vom in der Wasserkammer herrschenden Druck abhängt, sowie eine außerhalb der Wasserkammer angeordnete Messeinrichtung zum Erfassen der Auslenkung der Membran.

Durch diese Maßnahme ist es auf einfache Weise möglich, automatisch zu erfassen, ob der in der Wasserkammer herrschende Druck hinreichend groß ist, so dass das Auftreten von störenden (Gas-)Blasen ausgeschlossen werden kann oder aber zumindest unwahrscheinlich und die korrekte Funktionsfähigkeit des Ultraschallprüfkopfes sichergestellt ist.

In einer weiteren vorteilhaften Ausgestaltung der Erfindung umfasst die Messeinrichtung außerdem Mittel zum Überwachen ihrer korrekten Funktion. Auf diese Weise wird auch bei einer Fehlfunktion der Messeinrichtung verhindert, dass der Ultraschallprüfkopf zum Einsatz gelangt, da aufgrund der fehlenden Überprüfbarkeit nicht ausgeschlossen werden kann, dass sich bereits Blasen in der Wasserkammer gebildet haben.

In einer vereinfachten Ausführungsform ist es auch ausreichend, wenn die Messeinrichtung lediglich ein Über- oder Unterschreiten eines vorgegebenen Wertes der Auslenkung erfasst.

In einer technisch besonders einfach zu realisierenden Ausführungsform der Erfindung umfasst die Messeinrichtung einen von der Membran betätigten Mikroschalter, dessen Schaltzustand optisch angezeigt wird, wobei in einer einfachen Ausführungsform der Schaltung der Mikroschalter je nach Auslenkung der Membran wenigstens eine Lichtquelle unmittelbar ein- oder ausschaltet.

Wenn der Mikroschalter ein Wechselschalter ist, der zwei Lichtquellen abwechselnd ein- bzw. ausschaltet, kann die Messeinrichtung einfach auf korrekte Funktionsfähigkeit überprüft werden, da zumindest eine der beiden Lichtquellen stets leuchten muss. Fallen beide Lichtquellen aus, ist dies ein Zeichen dafür, dass die Messeinrichtung nicht betriebsbereit ist.

Zur weiteren Erläuterung der Erfindung wird auf das in den Figuren dargestellte Ausführungsbeispiel verwiesen. Es zeigen:
Figur 1 einen Ultraschallprüfkopf gemäß der Erfindung in einer schematischen Prinzipdarstellung,
Figur 2 ein vereinfachtes Schaltbild einer am Ultraschallprüfkopf angeordneten Messeinrichtung zum Erfassen der Auslenkung der Membran.

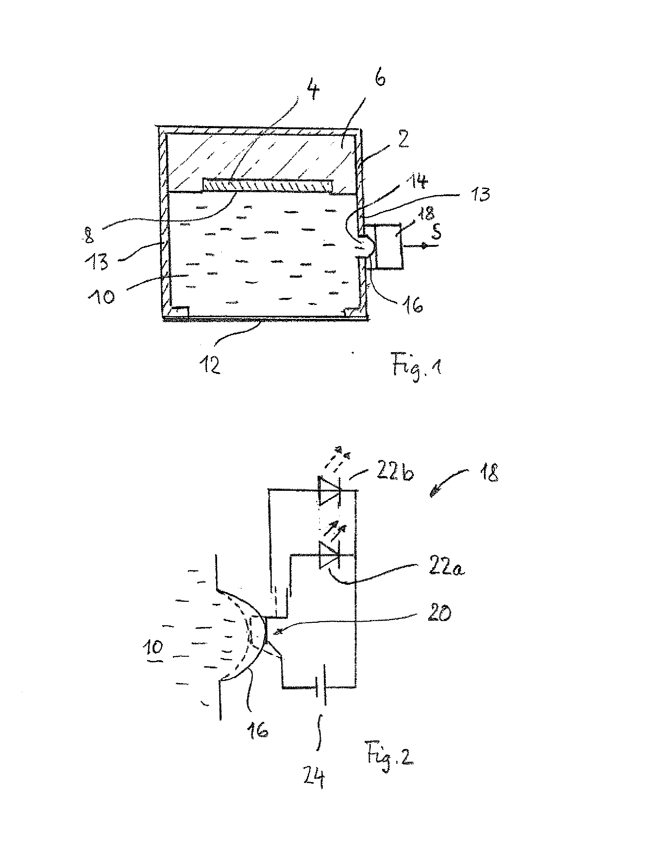

Gemäß Figur 1 umfasst ein Ultraschallprüfkopf einen in einem Gehäuse 2 angeordneten Ultraschallwandler 4, der in einem Backing 6 eingebettet ist und mit seiner Sendefläche 8 an eine im Gehäuse 2 befindliche Wasserkammer 10 angrenzt. An der der Sendefläche 8 gegenüberliegenden Seite ist das Gehäuse 2 mit einer Koppelmembran 12 verschlossen. Diese Koppelmembran 12 dient zum Ankoppeln des Ultraschallprüfkopfes an ein zu prüfendes Werkstück.

Eine Seitenwand 13 der Wasserkammer 10 ist mit einer Öffnung 14 versehen, die mit einer elastischen Membran 16 verschlossen ist. Die Membran 16 ist in Folge eines in der Wasserkammer 10 herrschenden Überdruckes nach außen gewölbt. Die Auslenkung der Membran 16 wird nun mit Hilfe einer am Ultraschallprüfkopf außerhalb der Wasserkammer 10 an der Seitenwand 13 angeordneten Messeinrichtung 18 erfasst, die beispielsweise ein der Auslenkung entsprechendes Messsignal S erzeugt. Auf diese Weise kann überprüft werden, ob der in der Wasserkammer 10 befindliche Druck noch ausreichend hoch ist, um eine Blasenfreiheit zu gewährleisten.

Im schematischen Schaltbild der Figur 2 ist eine besonders einfache Ausführung der Messeinrichtung 18 veranschaulicht. Diese umfasst einen mit der Membran 16 mechanisch gekoppelten Mikroschalter 20. Der Mikroschalter 20 ist als Wechselschalter ausgeführt und schaltet je nach Auslenkung der Membran 16 abwechselnd eine von zwei Lichtquellen 22a und 22b an eine Spannungsquelle 24, beispielsweise eine Batterie. In der Figur ist mit durchgezogenen Linien ein Schaltzustand veranschaulicht, bei dem die Auslenkung oder Auswölbung der Membran ausreichend groß ist, um die Lichtquelle 22a in den Stromkreis der Spannungsquelle 24 zu schalten. Sinkt der Druck in der Wasserkammer 10 ab, so verringert sich entsprechend die Auslenkung der Membran 16, so dass der Mikroschalter 20 nunmehr die Lichtquelle 22b mit der Spannungsquelle 24 verbindet. Welche der beiden Lichtquellen 22a,b, im Beispiel verschiedenfarbige Leuchtdioden, leuchtet, zeigt nun, ob der Ultraschallprüfkopf betriebsbereit ist oder nicht. Leuchten beide Lichtquellen 22a,b nicht, ist dies ein Indiz dafür, dass die Messeinrichtung 18 nicht betriebsbereit ist. Dies kann eine grundsätzliche Funktionsstörung der Messeinrichtung 18 bedeuten oder einfach ein Indiz dafür sein, dass die als Spannungsquelle 24 verwendete Batterie ausgetauscht werden muss.

## Patentansprüche

1. Ultraschallprüfkopf mit einer als Vorlaufstrecke dienenden geschlossenen Wasserkammer (10), mit einer in einer Seitenwand der Wasserkammer (10) angeordneten Membran (16), deren Auslenkung vom in der Wasserkammer (10) herrschenden Druck abhängt, sowie mit einer außerhalb der Wasserkammer (10) angeordneten Messeinrichtung (18) zum Erfassen der Auslenkung der Membran (10).

2. Ultraschallprüfkopf nach Anspruch 1, bei dem die Messeinrichtung (18) Mittel zum Überwachen ihrer korrekten Funktion umfasst.

3. Ultraschallprüfkopf nach Anspruch 1 oder 2, bei dem die Messeinrichtung (18) ein Über- oder Unterschreiten eines vorgegebenen Wertes der Auslenkung erfasst.

4. Ultraschallprüfkopf nach Anspruch 3, bei dem die Messeinrichtung (18) einen von der Membran (16) betätigten Mikroschalter (20) umfasst, dessen Schaltzustand optisch angezeigt wird.

5. Ultraschallprüfkopf nach Anspruch 4, bei dem die Messeinrichtung (18) wenigstens eine Lichtquelle (22a,b) enthält, die durch den Mikroschalter (20) ein- oder ausgeschaltet wird.

6. Ultraschallprüfkopf nach Anspruch 4, bei dem der Mikroschalter (20) ein Wechselschalter ist, der zwei Lichtquellen (22a,b) abwechselnd ein- bzw. ausschaltet.
